# EUROPEAN PATENT APPLICATION

(11) **EP 4 455 866 A1**
(43) Date of publication of application: **30.10.2024**
(21) Application number: 23806612.0
(22) Date of filing: 27.03.2023
(51) Int. Cl.: G06F 8/656

(54) **SUBPROGRAM UPDATING METHOD AND APPARATUS, AND ELECTRONIC DEVICE, COMPUTER-READABLE STORAGE MEDIUM AND COMPUTER PROGRAM PRODUCT**

(30) Priority: 20.05.2022 CN 202210553269
(71) Applicant: Tencent Technology (Shenzhen) Company Limited, Shenzhen, Guangdong 518057 (CN)
(72) Inventor: GUO, Fengmian, Shenzhen, Guangdong 518057 (CN); FU, Boquan, Shenzhen, Guangdong 518057 (CN); HUANG, Canhui, Shenzhen, Guangdong 518057 (CN)
(74) Representative: Nederlandsch Octrooibureau
(86) International application number: PCT/CN2023/084103
(87) International publication number: WO 2023/221654

(57) **Abstract**

Disclosed in the present application are a subprogram updating method and apparatus, and an electronic device, a computer-readable storage medium and a computer program product, which can be applied to various scenarios such as cloud technology, artificial intelligence and intelligent transportation. The method comprises: receiving a modification operation for a logical code file of a target subprogram; if a modified target logical code file is not an ingress logical code file of the subprogram, determining a target page which is associated with the target logical code file; when an original component in the target page is currently in a loaded state, registering a target component on the basis of the target logical code file; replacing the original component with the target component; and displaying the updated target page, wherein the updated target page comprises the target component.

## Description

### RELATED APPLICATION

This application is based upon and claims priority to Chinese Patent Application No. 202210553269.7, filed on May 20, 2022, which is incorporated herein by reference in its entirety.

### FIELD OF THE TECHNOLOGY

This application relates to the field of computer technologies, and specifically, to a subroutine update method and apparatus, an electronic device, a computer-readable storage medium, and a computer program product.

### BACKGROUND OF THE DISCLOSURE

A mini program is a mobile application program that is developed based on a specific programming language and can be used without downloading and installation, and can run on a cross-platform mobile client. A biggest feature of the mini program is convenient to use. The mini program is usually implemented by using an application as a running platform. A user can open the mini program by scanning a two-dimensional code corresponding to the mini program through the application or searching in the application without manually installing the mini program in an operating system of a mobile terminal. Based on features of the mini program, a problem that the user does not want to install too many applications on a terminal may be resolved to some extent.

In a development process of the mini program in the related art, if a developer modifies a logic code file of a page, and the page is in a display state, the mini program needs to be restarted to update the page, to inject a compilation result corresponding to the modified logic code file into the updated page. For the developer, operations are cumbersome, the update time is long, and development efficiency is low.

### SUMMARY

Embodiments of this application provide a subroutine update method and apparatus, an electronic device, a computer-readable storage medium, and a computer program product, to hot update a target page, thereby reducing update time and improving development efficiency.

An embodiment of this application provides a subroutine update method, including:
receiving a modification operation on a logic code file of a target subroutine;
determining, in response to a modified target logic code file being different from an ingress logic code file of the subroutine, a target page associated with the target logic code file;
registering a target component based on the target logic code file when an original component in the target page is currently in a loaded state;
replacing the original component corresponding to the target logic code file with the target component corresponding to the target logic code file; and
compiling component information of the target component, and updating and displaying an updated target page, the updated target page including the target component.

An embodiment of this application provides a subroutine update apparatus, including:
a receiving unit, configured to receive a modification operation on a logic code file of a target subroutine;
a determining unit, configured to determine, in response to a modified target logic code file being different from an ingress logic code file of the subroutine, a target page associated with the target logic code file;
a registration unit, configured to register a target component based on the target logic code file when an original component in the target page is currently in a loaded state;
a replacement unit, configured to replace an original component corresponding to the target logic code file with a target component corresponding to the target logic code file; and
an update unit, configured to update and display an updated target page, the updated target page including the target component.

An embodiment of this application provides an electronic device, including a processor and a memory, the memory having a plurality of instructions stored therein, and the processor loading the instructions, to perform the operations in the subroutine update method provided in the embodiments of this application.

An embodiment of this application further provides a computer-readable storage medium, having a computer program stored therein, the computer program, when executed by a processor, implementing the operations in the subroutine update method provided in the embodiments of this application.

An embodiment of this application further provides a computer program product, including a computer program or instructions, the computer program or the instructions, when executed by a processor, implementing the operations in the subroutine update method provided in the embodiments of this application.

In the embodiments of this application, after the logic code file of the subroutine is modified, the hot update of the target page is implemented by re-registering the target component and replacing the original component with the target component. Compared with an overall update of the target page in the related art, because only the components involved in the modification is updated, the update time can be significantly reduced and the development efficiency can be improved.

### BRIEF DESCRIPTION OF THE DRAWINGS

To describe the technical solutions in embodiments of this application more clearly, the following briefly describes the accompanying drawings required for describing the embodiments. Apparently, the accompanying drawings in the following description show merely some embodiments of this application, and a person skilled in the art may still derive other drawings from these accompanying drawings without creative efforts.
FIG. 1a is a schematic diagram of a scenario of a subroutine update method according to an embodiment of this application.
FIG. 1b is a flowchart of a subroutine update method according to an embodiment of this application.
FIG. 1c is an explanatory diagram of a subroutine update method according to an embodiment of this application.
FIG. 1d is another explanatory diagram of a subroutine update method according to an embodiment of this application.
FIG. 1e is another explanatory diagram of a subroutine update method according to an embodiment of this application.
FIG. 1f is another flowchart of a subroutine update method according to an embodiment of this application.
FIG. 1g is a schematic diagram of logic of a subroutine update method according to an embodiment of this application.
FIG. 2 is another flowchart of a subroutine update method according to an embodiment of this application.
FIG. 3 is a schematic diagram of a structure of a subroutine update apparatus according to an embodiment of this application.
FIG. 4 is a schematic diagram of a structure of an electronic device according to an embodiment of this application.

### DESCRIPTION OF EMBODIMENTS

The following clearly and completely describes the technical solutions in embodiments of this application with reference to the accompanying drawings in the embodiments of this application. Apparently, the embodiments to be described are merely some rather than all of the embodiments of this application. All other embodiments obtained by a person skilled in the art based on the embodiments of this application without creative efforts fall within the protection scope of this application.

Before the embodiments of this application are further described in detail, nouns and terms involved in the embodiments of this application are explained, and the nouns and terms involved in the embodiments of this application are applicable to the following explanations.

(1) Subroutine: It is also referred to as a mini program or a light app. Different from a native app that needs to be downloaded and installed, the mini program is an application program that only needs to be downloaded for using without installation.

The subroutine may be developed based on a Javascript language, and can be directly interpreted and executed through a browser environment of HyperText Mark-up Language 5 (HTML5) built in an electronic device, thereby saving installation operations.

For example, to provide a more diversified service for a user, a developer develops a corresponding mini program for an application program (that is, a host application program, for example, including an instant messaging application, a shopping application, and an email application) of the electronic device. The mini program may be pre-implanted into a client, or may be manually downloaded and run by the user in the client.

(2) Structure tree: It is a directory structure of a subroutine. By using the mini program as an example, a root directory of a structure tree of the mini program includes a framework global file, a framework page file, and a tool class file. The framework global file may include the following logic code files: mini program logic (app.js, which defines global data and defines a function file), a mini program setting (app.json), and a mini program public style table (app.wxss). The framework page file (index) includes the following logic files: a page logic file (indexjs), a page structure file (index.wxml), a page style file (inex.wxss), and a page configuration file (index.j son file).

The embodiments of this application provide a subroutine update method and apparatus, an electronic device, a computer-readable storage medium, and a computer program product. The subroutine update apparatus may be specifically integrated into an electronic device, where the electronic device may be a device such as a terminal or a server.

The subroutine update method in the embodiments of this application may be performed on the terminal, or may be performed on the server, or may be jointly performed by the terminal and the server. The foregoing examples are not to be construed as a limitation on this application.

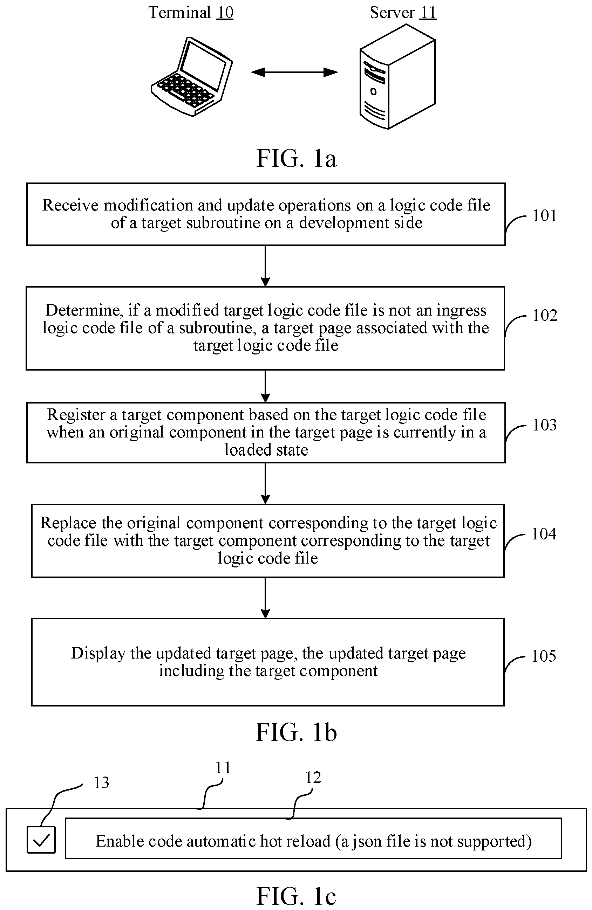

As shown in FIG. 1a, an example in which the terminal and the server jointly perform the subroutine update method is used. A system for updating a subroutine provided in the embodiments of this application includes a terminal 10 and a server 11. The terminal 10 and the server 11 are connected through a network, for example, through a wired network or a wireless network. The subroutine update apparatus may be integrated into the terminal.

The terminal 10 may be configured to: modify a logic code file of a target subroutine; and transmit a modification operation to the server 11, and trigger, if a modified target logic code file is not an ingress logic code file of a subroutine, the server 11 to determine a target page associated with the target logic code file; and register a target component based on the target logic code file when an original component in the target page is currently in a loaded state; and replace an original component corresponding to the target logic code file with a target component corresponding to the target logic code file, and display an updated target page, the updated target page including the target component. The terminal 10 may include a mobile phone, a smart television, a tablet computer, a notebook computer, a vehicle-mounted terminal, a personal computer (PC), or the like. An application program, that is, a host application program, may be further arranged on the terminal 10, where the application program includes a browser environment for running a subroutine.

The server 11 may be configured to: receive a modification operation on a logic code file of a target subroutine on the terminal 10; and determine, if a modified target logic code file is not an ingress logic code file of a subroutine, a target page associated with the target logic code file. The server 11 may be a single server, a server cluster formed by a plurality of servers, or a cloud server. In the subroutine update method or apparatus disclosed in the embodiments of this application, a plurality of servers may form a blockchain network, and the servers are nodes in the blockchain network.

As an alternative solution, the foregoing solution may also be independently performed by the terminal 10.

Details are separately described below. A description order of the following embodiments is not intended to limit preference orders of the embodiments.

The embodiments of this application are described from a perspective of the subroutine update apparatus. The subroutine update apparatus may be specifically integrated into an electronic device, where the electronic device may be a device such as a server or a terminal.

In the embodiments of this application, the subroutine update method may be applied to a development scenario of the mini program. The embodiments of this application may be applied to various scenarios, for example, a cloud technology, artificial intelligence, intelligent traffic, or assisted driving.

As shown in FIG. 1b, a specific process of the subroutine update method is as follows:

Operation 101. Receive a modification operation on a logic code file of a target subroutine.

The target subroutine may be specifically a subroutine currently in development and debugging stages. When a developer develops and debugs the subroutine through a developer tool in the electronic device, the developer usually needs to modify logic code of the subroutine while previewing a page debugging effect corresponding to the subroutine.

In the related art, after a subroutine developer modifies the logic code file of the target subroutine, the developer tool invokes a basic library interface of the target subroutine for application reload. In other words, after page code of the subroutine is modified, the subroutine needs to be restarted to enter the page. Operations to be performed by the subroutine developer are cumbersome, and update time is long, resulting in poor development experience.

In the subroutine update method provided in the embodiments of this application, after the logic code file of the subroutine is changed, a page component is re-registered, and an original component is replaced with a new component, to achieve a hot update effect. In this way, the update time may be controlled to be very short, thereby improving development efficiency of the subroutine developer and improving the development experience. Hot update (which may also be referred to as hot reload) herein is an update manner in which a page can be updated without restarting the subroutine.

In the embodiments of this application, the subroutine may be a light app, a mini program, or the like. This is not limited in the embodiments of this application.

The light app is a full-featured application program that only needs to be downloaded without installation and can be used immediately after searching. The light app can not only support an invocation during search by a user, but also support active subscription by the user. If the user has a subscription need and adds an application, a relevant developer can accumulate the user and continuously and accurately push information and services to the user.

The mini program is a script file or an application program developed based on a specific programming language (for example, Javascript), and can implement a service function. The mini program only needs to be downloaded for using without installation. The mini program is usually run by using a built-in browser environment of an application program, to be specific, the application program is run as a host platform. The application program is also referred to as a host application program of the mini program. The user may run the mini program through a code scanning function of the application program. If the mini program has not been run in the application program before, the mini program needs to be downloaded first and then run. Alternatively, the application program may be searched fora mini program in an application store, and then the mini program is downloaded and run.

The developer tool is a tool that helps the developer develop and debug the subroutine simply and efficiently.

In the embodiments of this application, logic code of each page corresponding to the target subroutine is recorded in the logic code file. The logic code may be configured for processing an event triggered in a corresponding subroutine page, and may further be configured for performing another logic processing including data processing. The logic code file may be a script file, for example, a JavaScript script file. For example, the logic code file may be a file whose suffix name is .js.

JavaScript ("JS" for short) is a lightweight and interpreted or just-in-time compilation programming language having a function priority.

Operation 102. Determine, if a modified target logic code file is different from an ingress logic code file of a subroutine, a target page associated with the target logic code file.

The target logic code file is the modified logic code file corresponding to the target subroutine. The target logic code file may be a file in a j s format, and is referred to as a js file for short. For example, the target subroutine may correspond to a plurality of logic code files, and the target logic code file may refer to a modified logic code file in the plurality of logic code files.

The ingress logic code file of the subroutine may be configured for monitoring and processing a life cycle function of the subroutine, and declaring a global variable, and may further be configured for invoking a rich application programming interface (API) provided by a framework. The ingress logic code file of the subroutine may be considered as a global configuration file of the target subroutine. For example, the ingress logic code file of the subroutine may be a file whose suffix name is .js. For example, the ingress logic code file of the subroutine is app.js, and app.js is script code of the subroutine and is equivalent to an ingress of a program. When the subroutine starts, app.j s triggers a method for which the subroutine declares a cycle. If events such as logging in and reading information need to be performed when the subroutine is loaded, a related operation may be performed herein.

The global configuration file is a file for configuring the subroutine as a whole, and may specifically include subroutine global configuration information for configuring a path of a subroutine page configuration file, a subroutine window presentation form, a network timeout threshold of the subroutine, and the like.

In the embodiments of this application, the operation "Determine, if a modified target logic code file is different from an ingress logic code file of a subroutine, a target page associated with the target logic code file" may include: performing a hot reload process for the modified target logic code file when the modification operation carries a hot reload instruction; and if the target logic code file is different from the ingress logic code file of the subroutine, determining, by using the hot reload process, the target page associated with the target logic code file.

In a specific embodiment, the developer tool of the target subroutine may include a control for the subroutine developer to select whether to perform hot reload. For example, a hot reload control 11 in the developer tool shown in FIG. 1c includes prompt content 12 of "start code automatic hot reload", and further includes a switch 13 for automatic hot reload. If an operation of checking the switch 13 in the developer tool by the subroutine developer is received, because the operation carries an instruction for generating hot reload, the hot reload process for the target subroutine may be executed after the target logic code file of the target subroutine is modified. If an operation of checking the switch 13 in the developer tool by the subroutine developer is not received, after the target logic code file of the target subroutine is modified, the hot reload process is not executed, and the updated page is displayed by restarting the target subroutine.

If the operation of checking the switch 13 in the developer tool by the subroutine developer is received, the operation carries the instruction for generating the hot reload. When a subsequent subroutine developer finishes editing the logic code file of the target subroutine, and receives an instruction for storing the modified target logic code file, automatic update of a relevant page may be triggered. For example, the modification operation may carry the hot reload instruction. When the subsequent subroutine developer stores the modified target logic code file, a hot reload process is triggered. Based on the hot reload process, after the developer tool receives change information of the logic code file, a path and content of the changed target logic code file may be transferred to a subroutine basic library. After the subroutine basic library receives the path and the content of the changed target logic code file, a new page component is re-registered, and an original component is replaced with the new component, thereby achieving a hot update effect.

The hot reload process may specifically include: If a corresponding page of the target logic code file is currently in a loaded and displayed state, a compilation result (that is, the target component) of the target logic code file may be directly replaced with an original component in the corresponding page, so that there is no need to compile all the logic code files corresponding to the target subroutine and restart the subroutine to update the target page. Compared with compiling all the logic code files in the target page and restarting the subroutine, the update time is significantly shortened.

In some embodiments, the hot reload process does not support a file in a json format. The j son format is a lightweight data exchange format that stores and represents data by using a text format completely independent of a programming language.

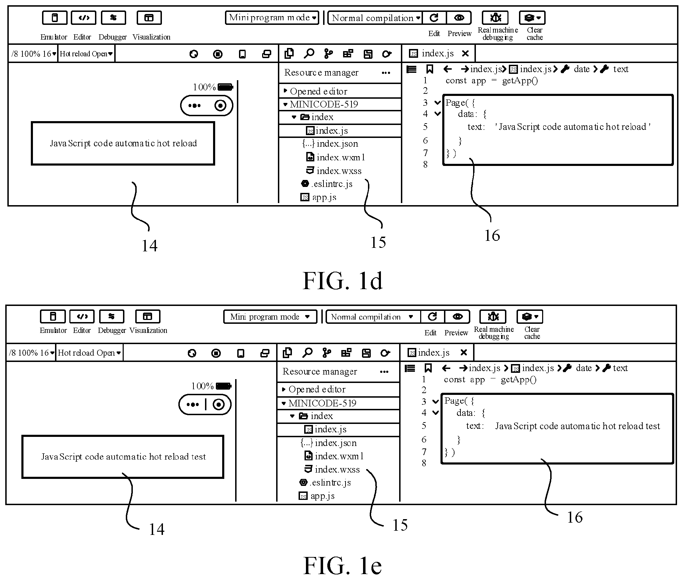

For example, FIG. 1d shows a target page 14 of the target subroutine, a resource manager 15 and a code editing interface 16 in the developer tool. The resource manager 15 displays a framework page file (index) of the mini program, including index.json, index.wxml, and index.wxss, and further displays a frame global file of the mini program, including mini program logic (app.js). Content of the logic code file (index.js) of the target subroutine is displayed in the code editing interface 16, including a data attribute. The data attribute includes a text, and content of the text is "JavaScript code automatic hot reload". When the switch for hot reload is in an on-state, if the content of the text needs to be changed to "JavaScript code automatic hot reload test" in the code editing interface 16 shown in FIG. 1e, in this case, the target page 14 associated with the target logic code file is in a display state, the target page 14 is automatically refreshed, so that the modified text "JavaScript code automatic hot reload test" is directly rendered on the target page 14 shown in FIG. 1e, and there is no need to perform an operation of restarting the subroutine. In this way, development is more convenient.

In the embodiments of this application, a non-ingress logic code file of the subroutine includes a page ingress logic code file and a non-page ingress logic code file. The operation "Determine, if a modified target logic code file is different from an ingress logic code file of a subroutine, a target page associated with the target logic code file" may include: determining a page corresponding to the target logic code file as the target page if the modified target logic code file is the page ingress logic code file; or if the modified target logic code file is the non-page ingress logic code file, analyzing a page dependency relationship on the target logic code file, to obtain a dependency page corresponding to the target logic code file, and determining the dependency page as the target page.

The page ingress logic code file and the non-page ingress logic code file do not belong to the ingress logic code file of the subroutine, and the page ingress logic code file and the non-page ingress logic code file may be considered as local configuration files of the target subroutine. In the embodiments of this application, the page ingress logic code file may be a logic code file corresponding to a subroutine page, and the non-page ingress logic code file may be an ingress logic code file of a component, or may be a logic code file on which some subroutine pages depend.

For example, each page of the target subroutine may correspond to a logic code file. In a logic code file corresponding to a subroutine page, logic code for processing a trigger event in the subroutine page may be recorded. The logic code file is a file whose suffix name is .js. For example, a logic code file of a subroutine page is page.js, and page.js is a page ingress logic code file of the subroutine page.

In the embodiments of this application, the subroutine update method may further include: compiling the target logic code file if the modified target logic code file is an ingress logic code file of a subroutine; and restarting the target subroutine based on a compilation result, to display the updated page corresponding to the target logic code file through the restarted target subroutine.

If the modified target logic code file is the ingress logic code file of the subroutine, for example, an app.js file, because the app.js file is a global file of the target subroutine, the app.js file cannot be updated in a hot reload manner, compilation processing is performed on the modified logic code file of the target subroutine, and the compilation result is injected into the corresponding page by restarting the target subroutine.

In a specific embodiment, when the subroutine developer turns on the switch for automatic hot reload in the developer tool, the developer tool starts the automatic hot reload and starts to monitor whether the logic code file of the target subroutine changes; and the developer tool monitors the change in the logic code file of the target subroutine in response to the modification on the logic code file by the subroutine developer. In this case, the developer tool automatically determines a type of a currently modified target logic code file. Three cases are divided herein:

Case 1: If the currently modified target logic code file is the ingress logic code file of the subroutine, that is, a subroutine ingress js, the basic library interface is invoked to perform application reload, and in other words, the subroutine is restarted.

Case 2: If the currently modified target logic code file is the page ingress logic code file, in other words, it is monitored that a page ingress j s changes, an update application code (updateAppCode) interface in the basic library is invoked to hot update the page corresponding to the target logic code file.

Case 3: If the currently modified target logic code file is the non-page ingress logic code file, in other words, it is monitored that a non-page ingress js changes, all pages that depend on the target logic code file are analyzed, and the updateAppCode interface in the basic library is invoked to hot update all dependency pages.

Operation 103. Register a target component based on the target logic code file when an original component in the target page is currently in a loaded state.

The original component in the target page is a component in the target page before the logic code file of the target subroutine is modified.

The component is an encapsulation of data and a method. For example, the component may be a constituent unit of the subroutine page, and has a visual form. The component may further encapsulate logic code for processing an event triggered by the component. The component includes but is not limited to a button component, a progress component, a text component, a form component, a slider component, or the like.

The event triggered by the component is an event triggered by operating the component. The event may be configured for describing an operation occurring in the subroutine page. The event may be classified into a plurality of event types, for example, a touch event, a form submit event, an input event, a scroll event, and the like.

The original component in the target page is in the loaded state, which may be specifically in the loaded and displayed state.

The registration of a new target component based on the target logic code file may specifically defining construction options of the target component based on the target logic code file, and the like. Component logic, a component attribute, and the like corresponding to the target component may be obtained through registration.

In some embodiments, if the original component in the target page is currently in an unloaded state, in other words, no component is currently displayed in the target page, there is no need to perform the hot reload, to save resources.

Operation 104. Replace the original component corresponding to the target logic code file with the target component corresponding to the target logic code file.

For example, component information of the original component corresponding to the target logic code file may be replaced with component information of the target component corresponding to the target logic code file. The original component corresponding to the target logic code file is a component corresponding to the target logic code file before modification. In some embodiments, a change of the logic code file involves changes of a plurality of components. A plurality of target components may be registered based on the modified target logic code file. For each original component, a target component corresponding to the changed original component may be determined, and component information of the original component is replaced with component information of the corresponding target component.

In the embodiments of this application, the operation "Replace an original component corresponding to the target logic code file with a target component corresponding to the target logic code file" may include: replacing component logic of the original component corresponding to the target logic code file with component logic of the target component corresponding to the target logic code file; and replacing a component instance of the original component corresponding to the target logic code file with a component instance of the target component corresponding to the target logic code file.

The component logic may include information such as a registration point of the component. The registration point of the original component may be a path of the original component in the structure tree. The replacement of the component logic of the original component with the component logic of the target component may specifically replacing a path of the original component with a path of the target component.

In the embodiments of this application, the operation "replacing a component instance of the original component corresponding to the target logic code file with a component instance of the target component corresponding to the target logic code file" may include: obtaining the component instance corresponding to the original component from the logic code file of the target subroutine; constructing the component instance corresponding to the target component based on a component attribute of the target component corresponding to the target logic code file; and replacing the component instance corresponding to the original component with the component instance of the target component.

The component instance may be an instance in a directory. In object-oriented programming, a "class" after instantiation is referred to as an instance. For example, the component instance is a set of running programs created to implement a specific function. The component instance can construct internal logic based on an incoming parameter and a component and run to implement a specific function. The specific function may be a service web page interface function.

For example, an instance object of the target component may be first created, and attribute values in the construction options corresponding to the target component are directly assigned to the newly created instance object to obtain the component instance of the target component.

In the embodiments of this application, the operation "constructing the component instance corresponding to the target component based on a component attribute of the target component corresponding to the target logic code file" may include: constructing a mapping relationship set corresponding to the target component based on an association relationship between an attribute and an attribute value of the target component corresponding to the target logic code file; and constructing the component instance corresponding to the target component based on the mapping relationship set.

The mapping relationship set may be specifically a mapping relationship table. The mapping relationship table may be a two-dimensional data table, and two dimensions are a configuration item attribute definition and a configuration attribute value corresponding to the target component respectively.

The component instance corresponding to the target component can be constructed through data binding based on the mapping relationship set. The data binding refers to a method for binding an attribute and an attribute value of a user interface element (to be specific, a component) to an attribute on a type instance.

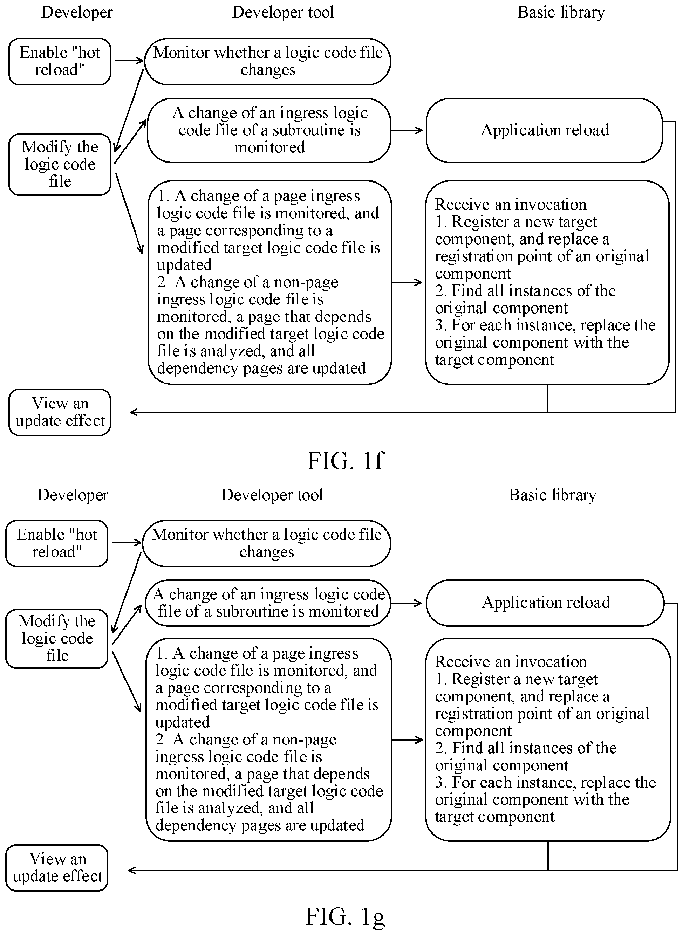

In a specific embodiment, after the target page associated with the modified target logic code file is determined, an updateAppCode interface in the basic library may be invoked to perform hot update on the target page. A specific process is as follows: Referring to FIG. 1f, the basic library receives an updateAppCode invocation, and if a parameter path (PATH) of the target logic code file corresponds to a loaded component (that is, the original component in the foregoing embodiment), the following hot reload operations may be performed: registering a new target component by reusing an element registration function (regiterElement), and replacing a registration point of the original component with a registration point of the target component; finding all instances of original components in all target pages through depth first search; performing replacement on each instance of the original component: extracting all attributes and attribute values of the target component to form a mapping relationship table; creating an instance object of the target component, and setting the mapping relationship table by using a data setting function (setData), to obtain a component instance of the target component; replacing the component instance of the original component with the component instance of the target component by using an element replacement function (replaceElement); and after the basic library updates the instance, reloading the target page based on component data of the basic library, to see a hot update effect on the target page.

The depth first search (DFS) is a type of a graph algorithm, and is a traversal algorithm for graphs and trees. A corresponding topology ranking table of a target graph may be generated by using the depth first search algorithm. The topology ranking table may be used to more conveniently resolve many related graph theory problems, such as a maximum path problem.

The parameter PATH may be specifically modified path information of the target logic code file.

The subroutine update method provided in the embodiments of this application may improve a speed at which the subroutine developer develops the subroutine, so that the subroutine developer can perform smoother code editing and debugging, thereby improving development efficiency.

In a specific embodiment, referring to the overall process of the hot reload shown in FIG. 1f, because the hot reload is performed on the developer tool, logic of the hot reload needs to be added to the developer tool. Because not all developers need the function of the hot reload, the developer tool provides a switch for the developer to select whether to enable the hot reload. By default, the hot reload may not be enabled. After the developer checks "enable automatic code hot reload", the developer tool starts the logic of the hot reload. When the developer modifies the logic code file and stores the modified target logic code file after the logic code file is edited, the developer tool receives a code change and executes logic of the hot update. The code change includes the following cases: the developer tool monitors a change of the ingress logic code of the subroutine, monitors a change of the page ingress logic code file, and monitors a change of the non-page ingress logic code file.

The logic for performing the hot reload by the developer tool is shown in FIG. 1g. A specific description is as follows:

The developer tool determines a file type of the currently modified target logic code file, and adaptively updates the page in a corresponding manner based on the file type of the currently modified target logic code file. Specifically, processing may be performed in three cases. Case 1: If the currently modified target logic code file is the ingress logic code file of the subroutine, when it is monitored that app.js changes, a basic library application reload interface is directly invoked for application reload. Case 2: If the currently modified target logic code file is the page ingress logic code file, it is monitored that a page ingress j s changes, and updateAppCode is invoked to update a page corresponding to the target logic code file. Case 3: If the currently modified target logic code file is the non-page ingress logic code file, it is monitored that a non-page ingress js changes, all pages that depend on the js file (that is, the target logic code file) are analyzed, and a basic library updateAppCode interface is invoked to update all dependency pages.

The developer tool invokes an updateAppCode (PATH, CONTENT) interface provided by the basic library to perform code hot update. Parameters carried are PATH and CONTENT. PATH represents an address of the modified target logic code file, and CONTENT represents content of the modified target logic code file.

After the developer tool invokes the updateAppCode, the process flows to the logic of the hot update of the basic library. If the parameter PATH corresponds to a loaded component (that is, the original component in the foregoing embodiment) js, the following hot reload operations are performed: registering a new target component by reusing the registerElement, and replacing a registration point of the original component with a registration point of the target component; finding all instances of original components in all pages; and performing replacement on each instance of the original component.

The operation "performing replacement on each instance of the original component" may include: extracting all attributes and attribute values of the target component to form a mapping relationship table; creating an instance object of the target component, and setting the mapping relationship table by using setData, to obtain the component instance of the target component; and replacing the component instance of the original component with the component instance of the target component by using an replaceElement; and
after the basic library updates the instance, reloading the target page based on component data of the basic library, to see a hot update effect on the target page. js may refer to a logic layer of a subroutine development framework that uses a JavaScript engine to provide the subroutine with a running environment for developer JavaScript code and unique functions of the subroutine.

Operation 105. Display the updated target page, the updated target page including the target component.

It can be learned from the foregoing that in the embodiments of this application, after the logic code file of the subroutine is modified, the target component is re-registered and the original component is replaced with the target component, compared with an overall update of the target page in the related art, because only the components involved in the modification is updated to implement the hot update of the target page, so that the update time can be significantly reduced and the development efficiency can be improved. In addition, in the embodiments of this application, the page is adaptively updated in a corresponding manner based on the file type of the currently modified target logic code file. In this way, the developer can modify logic code files of different file types, and efficiently display updated pages, so that the developer can intuitively view an update effect.

Based on the method described in the foregoing embodiment, the following further describes in detail by using an example in which the subroutine update apparatus is specifically integrated into the terminal.

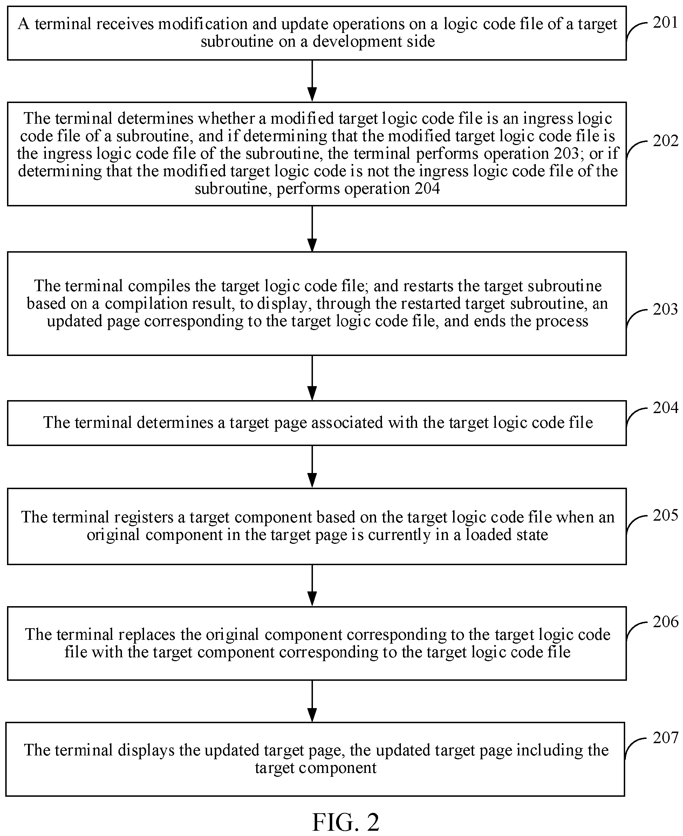

The embodiments of this application provide a subroutine update method, as shown in FIG. 2, a specific process of the subroutine update method is as follows:

201. A terminal receives a modification operation on a logic code file of a target subroutine on a development side.

In the subroutine update method provided in the embodiments of this application, after the logic code file of the subroutine is changed, a page component is re-registered, and an original component is replaced with a new component, to achieve a hot update effect. In this way, the update time may be controlled to be very short, thereby improving development efficiency of the subroutine developer and improving the development experience. Hot update (which may also be referred to as hot reload) herein is an update manner in which a page can be updated without restarting the subroutine.

For example, in the embodiments of this application, logic code of each page corresponding to the target subroutine is recorded in the logic code file. The logic code may be configured for processing an event triggered in a corresponding subroutine page, and may further be configured for performing another logic processing including data processing. The logic code file may be a script file, for example, a JavaScript script file. In some embodiments, the logic code file may be a file whose suffix name is .js.

202. The terminal determines whether a modified target logic code file is an ingress logic code file of a subroutine, and if determining that the modified target logic code file is the ingress logic code file of the subroutine, the terminal performs operation 203; or if determining that the modified target logic code file is not the ingress logic code file of the subroutine, the terminal performs operation 204.

The target logic code file is the modified logic code file corresponding to the target subroutine. The target logic code file may be a file in a js format, and is referred to as a js file for short. For example, the target subroutine may correspond to a plurality of logic code files, and the target logic code file may refer to a modified logic code file in the plurality of logic code files.

The ingress logic code file of the subroutine may be configured for monitoring and processing a life cycle function of the subroutine, and declaring a global variable, and may further be configured for invoking a rich application programming interface (API) provided by a framework. The ingress logic code file of the subroutine may be a file whose suffix name is j s. For example, the ingress logic code file of the subroutine is app.js, and app.js is script code of the subroutine and is equivalent to an ingress of a program. When the subroutine starts, app.j s triggers a method for which the subroutine declares a cycle. If events such as logging in and reading information need to be performed when the subroutine is loaded, a related operation may be performed herein.

203. The terminal compiles the target logic code file; and restarts the target subroutine based on a compilation result, to display the updated page corresponding to the target logic code file through the restarted target subroutine, and ends the process.

If the modified target logic code file is the ingress logic code file (specifically, an app.j s file) of the subroutine, and the app.j s file is a global file of the target subroutine, in this case, hot reload for the target logic code file cannot be performed, only the modified logic code file of the target subroutine can be compiled, and the compilation result is injected into a corresponding page by restarting the target subroutine.

Operation 204. The terminal determines a target page associated with the target logic code file.

In the embodiments of this application, a non-ingress logic code file of the subroutine includes a page ingress logic code file and a non-page ingress logic code file. The operation "Determine, if a modified target logic code file is different from an ingress logic code file of a subroutine, a target page associated with the target logic code file" may include: determining a page corresponding to the target logic code file as the target page if the modified target logic code file is the page ingress logic code file; or if the modified target logic code file is the non-page ingress logic code file, analyzing a page dependency relationship on the target logic code file, to obtain a dependency page corresponding to the target logic code file, and determining the dependency page as the target page.

The page ingress logic code file and the non-page ingress logic code file do not belong to the ingress logic code file of the subroutine, and the page ingress logic code file and the non-page ingress logic code file may be considered as local configuration files of the target subroutine. In the embodiments of this application, the page ingress logic code file may be a logic code file corresponding to a subroutine page, and the non-page ingress logic code file may be an ingress logic code file of a component, or may be a logic code file on which some subroutine pages depend.

For example, each page of the target subroutine may correspond to a logic code file. In a logic code file corresponding to a subroutine page, logic code for processing a trigger event in the subroutine page may be recorded. The logic code file is a file whose suffix name is .js. For example, a logic code file of a subroutine page is page.js, and page.js is a page ingress logic code file of the subroutine page.

Operation 205. The terminal registers a target component based on the target logic code file when an original component in the target page is currently in a loaded state.

The original component in the target page is a component in the target page before the logic code file of the target subroutine is modified.

A component is a simple encapsulation of data and a method. For example, the component may be a constituent unit of the subroutine page, and has a visual form. The component may further encapsulate logic code for processing an event triggered by the component.

The original component in the target page is in the loaded state, which may be specifically in the loaded and displayed state.

In the embodiments of this application, if the original component in the target page is currently in an unloaded state, there is no need to perform the hot reload.

The registration of a new target component based on the target logic code file may specifically defining construction options of the target component based on the target logic code file, and the like. Component logic, a component attribute, and the like corresponding to the target component may be obtained through registration.

Operation 206. The terminal replaces the original component corresponding to the target logic code file with the target component corresponding to the target logic code file.

For example, component information of the original component corresponding to the target logic code file may be replaced with component information of the target component corresponding to the target logic code file. The original component corresponding to the target logic code file is a component corresponding to the target logic code file before modification. In some embodiments, a change of the logic code file involves changes of a plurality of components. A plurality of target components may be registered based on the modified target logic code file. For each original component, a target component corresponding to the changed original component may be determined, and component information of the original component is replaced with component information of the corresponding target component.

In the embodiments of this application, the operation "Replace an original component corresponding to the target logic code file with a target component corresponding to the target logic code file" may include: replacing component logic of the original component corresponding to the target logic code file with component logic of the target component corresponding to the target logic code file; and replacing a component instance of the original component corresponding to the target logic code file with a component instance of the target component corresponding to the target logic code file.

The component logic may include information such as a registration point of the component. The registration point of the original component may be a path of the original component in the structure tree. The replacement of the component logic of the original component with the component logic of the target component may specifically replace a path of the original component with a path of the target component.

In the embodiments of this application, the operation "replacing a component instance of the original component corresponding to the target logic code file with a component instance of the target component corresponding to the target logic code file" may include: obtaining the component instance corresponding to the original component from the logic code file of the target subroutine; constructing the component instance corresponding to the target component based on a component attribute of the target component corresponding to the target logic code file; and replacing the component instance corresponding to the original component with the component instance of the target component.

The component instance may be an instance in a directory. In object-oriented programming, a "class" after instantiation is referred to as an instance. For example, the component instance is a set of running programs created to implement a specific function. The component instance can construct internal logic based on an incoming parameter and a component and run to implement a specific function. The specific function may be a service web page interface function.

For example, an instance object of the target component may be first created, and attribute values in the construction options corresponding to the target component are directly assigned to the newly created instance object to obtain the component instance of the target component.

In the embodiments of this application, the operation "constructing the component instance corresponding to the target component based on a component attribute of the target component corresponding to the target logic code file" may include: constructing a mapping relationship set corresponding to the target component based on an association relationship between an attribute and an attribute value of the target component corresponding to the target logic code file; and constructing the component instance corresponding to the target component based on the mapping relationship set.

The mapping relationship set may be specifically a mapping relationship table. The mapping relationship table may be a two-dimensional data table, and two dimensions are a configuration item attribute definition and a configuration attribute value corresponding to the target component respectively.

The component instance corresponding to the target component can be constructed through data binding based on the mapping relationship set. The data binding refers to a method for binding an attribute and an attribute value of a user interface element (to be specific, a component) to an attribute on a type instance.

207. The terminal displays the updated target page, the updated target page including the target component.

The subroutine update method provided in this application may improve a speed at which the subroutine developer develops the subroutine, so that the subroutine developer can perform smoother code editing and debugging, thereby improving development efficiency.

It can be learned from the foregoing that, in the embodiments of this application, after the logic code file of the subroutine is modified, the hot update of the target page is implemented by re-registering the target component and replacing the original component with the target component. Compared with an overall update of the target page, because only the components involved in the modification is updated, the update time can be reduced and the development efficiency can be improved.

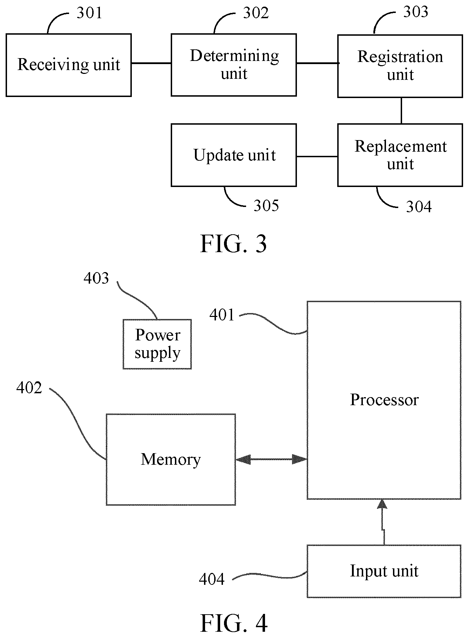

The embodiments of this application further provide a subroutine update apparatus. As shown in FIG. 3, the subroutine update apparatus may include a receiving unit 301, a determining unit 302, a registration unit 303, a replacement unit 304, and an update unit 305, specifically:
(1) The receiving unit 301 is configured to receive a modification operation on a logic code file of a target subroutine on a development side.
(2) The determining unit 302 is configured to determine, if a modified target logic code file is different from an ingress logic code file of a subroutine, a target page associated with the target logic code file.

In some embodiments of this application, a non-ingress logic code file of the subroutine includes a page ingress logic code file and a non-page ingress logic code file.

The determining unit may include a first determining subunit and a second determining subunit, specifically:
the first determining subunit is configured to determine a page corresponding to the target logic code file as the target page if the modified target logic code file is the page ingress logic code file; and
the second determining subunit is configured to analyze a page dependency relationship on the target logic code file if the modified target logic code file is the non-page ingress logic code file, to obtain a dependency page corresponding to the target logic code file, and determine the dependency page as the target page.

In some embodiments of this application, the determining unit may include an execution subunit and a third determining subunit, specifically: the execution subunit is configured to perform a hot reload process for the modified target logic code file when the modification operation carries a hot reload instruction; and
the third determining subunit is configured to: if the target logic code file is different from the ingress logic code file of the subroutine, determine, by using the hot reload process, the target page associated with the target logic code file.

(3) The registration unit 303 is configured to register a target component based on the target logic code file when an original component in the target page is currently in a loaded state.

(4) The replacement unit 304.

The replacement unit is configured to replace an original component corresponding to the target logic code file with a target component corresponding to the target logic code file.

In some embodiments of this application, the replacement unit may include a first replacement subunit and a second replacement subunit, specifically: the first replacement subunit is configured to replace component logic of the original component corresponding to the target logic code file with component logic of the target component corresponding to the target logic code file; and
the second replacement subunit is configured to replace a component instance of the original component corresponding to the target logic code file with a component instance of the target component corresponding to the target logic code file.

In some embodiments of this application, the second replacement subunit may be specifically configured to: obtain the component instance corresponding to the original component from the logic code file of the target subroutine; construct the component instance corresponding to the target component based on a component attribute of the target component corresponding to the target logic code file; and replace the component instance corresponding to the original component with the component instance of the target component.

In some embodiments of this application, the second replacement subunit may be specifically configured to: construct a mapping relationship set corresponding to the target component based on an association relationship between an attribute and an attribute value of the target component corresponding to the target logic code file; and construct the component instance corresponding to the target component based on the mapping relationship set.

(5) The update unit 305 is configured to compile component information of the target component, to update and display the target page, the updated target page including the target component.

In some embodiments of this application, the subroutine update apparatus may further include a compilation unit and a restart unit, specifically: the compilation unit is configured to compile the target logic code file if the modified target logic code file is the ingress logic code file of the subroutine; and
the restart unit is configured to restart the target subroutine based on a compilation result, and display the updated page corresponding to the target logic code file through the restarted target subroutine.

The embodiments of this application further provide an electronic device. FIG. 4 is a schematic diagram of a structure of an electronic device involved in the embodiments of this application. The electronic device may be a terminal, a server, or the like, and specifically:
the electronic device may include components such as a processor 401 of one or more processing cores, a memory 402 of one or more computer-readable storage media, a power supply 403, and an input unit 404. A person skilled in the art may understand that the structure of the electronic device shown in FIG. 4 does not constitute a limitation to the electronic device, and the electronic device may include more or fewer components than those shown in the figure, or some components may be combined, or a different component deployment may be used. Details are as follows:

The processor 401 is a control center of the electronic device, and connects various parts of the entire electronic device through various interfaces and lines. By running or executing a software program and/or a module stored in the memory 402, and invoking data stored in the memory 402, the processor 401 performs various functions of the electronic device and processes data. The processor 401 may include one or more processor cores. Preferably, the processor 401 may integrate an application processor and a modem processor. The application processor mainly processes an operating system, a user interface, an application program, and the like. The modem processor mainly processes wireless communication. The modem processor may alternatively not be integrated into the processor 401.

The memory 402 may be configured to store a software program and a module. The processor 401 runs the software program and the module stored in the memory 402, to perform various functional applications and data processing. The memory 402 may mainly include a program storage area and a data storage area. The program storage area may store an operating system, an application program required by at least one function (such as a sound playing function and an image display function), and the like. The data storage area may store data created based on use of the electronic device, and the like. In addition, the memory 402 may include a high speed random access memory, and may further include a non-volatile memory, such as at least one magnetic disk storage device, a flash storage device, or another volatile solid-state storage device. Correspondingly, the memory 402 may further include a memory controller for the processor 401 to access the memory 402.

The electronic device further includes the power supply 403 for supplying power to the components. Preferably, the power supply 403 may be logically connected to the processor 401 by using a power supply management system, thereby implementing functions such as charging, discharging, and power consumption management by using the power supply management system. The power supply 403 may further include any component such as one or more direct current or alternating current power supplies, a re-charging system, a power supply fault detection circuit, a power supply converter or an inverter, and a power supply state indicator.

The electronic device may further include the input unit 404. The input unit 404 may be configured to receive entered numeric or character information and generate keyboard, mouse, joystick, optical, or trackball signal input related to a user setting and function control.

Although not shown in the figure, the electronic device may further include a display unit, and the like. Details are not described herein again. Specifically, in the embodiments of this application, the processor 401 of the electronic device may load, based on the following instructions, executable files corresponding to processes of one or more application programs into the memory 402. The processor 401 runs the application programs stored in the memory 402, to implement various functions. Specifically:
receiving the modification operation on the logic code file of the target subroutine on the development side; determining, if the modified target logic code file is different from the ingress logic code file of the subroutine, the target page associated with the target logic code file; registering the target component based on the target logic code file when the original component in the target page is currently in the loaded state; replacing the original component corresponding to the target logic code file with the target component corresponding to the target logic code file; and compiling the component information of the target component, to update and display the target page, the updated target page including the target component.

For a specific implementation of the foregoing operations, refer to the foregoing embodiments. Details are not described herein again.

It can be learned from the foregoing that, in the embodiments of this application, after the logic code file of the subroutine is modified, the hot update of the target page is implemented by re-registering the target component and replacing the original component with the target component. In this way, the update time can be reduced and the development efficiency can be improved.

A person of ordinary skill in the art may understand that all or some operations of various methods in the foregoing embodiments may be implemented through instructions, or may be implemented by instructions by controlling relevant hardware, and the instructions may be stored in a computer-readable storage medium and loaded and executed by a processor.

Accordingly, the embodiments of this application provide a computer-readable storage medium, having a plurality of instructions stored therein, and the instructions being suitable to be loaded by a processor, to perform the operations in any subroutine update method provided in the embodiments of this application. For example, the instructions may perform the following operations:
receiving the modification operation on the logic code file of the target subroutine on the development side; determining, if the modified target logic code file is different from the ingress logic code file of the subroutine, the target page associated with the target logic code file; registering the target component based on the target logic code file when the original component in the target page is currently in the loaded state; replacing the original component corresponding to the target logic code file with the target component corresponding to the target logic code file; and compiling the component information of the target component, to update and display the target page, the updated target page including the target component.

For a specific implementation of the foregoing operations, refer to the foregoing embodiments. Details are not described herein again.

The computer-readable storage medium may include: a read-only memory (ROM), a random access memory (RAM), a magnetic disk, an optical disc, or the like.

Because the instructions stored in the computer-readable storage medium may perform the operations of any subroutine update method provided in the embodiments of this application, the instructions can implement advantageous effects that may be implemented by any subroutine update method provided in the embodiments of this application. For details, refer to the foregoing embodiments. Details are not described herein again.

According to an aspect of this application, a computer program product or a computer program is provided. The computer program product or the computer program includes computer instructions. The computer instructions are stored in a computer-readable storage medium. A processor of a computer device reads the computer instructions from the computer-readable storage medium, and the processor executes the computer instructions, so that the computer device is enabled to perform the method provided in various optional implementations of the subroutine update method.

The subroutine update method and relevant devices provided in the embodiments of this application are described in detail above. The principles and implementations of this application are described herein through specific examples. The description about the embodiments above is merely provided to help understand the method and core ideas of this application. In addition, a person skilled in the art can make modifications to the specific implementations and the application scope based on the idea of this application. Therefore, the content of the specification shall not be construed as a limitation on this application.

## Claims

1. A subroutine update method, executable by an electronic device, the method comprising:
receiving a modification operation on a logic code file of a target subroutine;
determining, in response to a modified target logic code file being different from an ingress logic code file of the subroutine, a target page associated with the target logic code file;
registering a target component based on the target logic code file when an original component in the target page is currently in a loaded state;
replacing the original component corresponding to the target logic code file with the target component corresponding to the target logic code file; and
displaying an updated target page, the updated target page comprising the target component.

2. The method according to claim 1, further comprising:
compiling the target logic code file in response to the modified target logic code file being the ingress logic code file of the subroutine; and
restarting the target subroutine based on a compilation result, and displaying an updated page corresponding to the target logic code file through the restarted target subroutine.

3. The method according to claim 1, wherein a non-ingress logic code file of the subroutine comprises a page ingress logic code file and a non-page ingress logic code file; and
determining, in response to the modified target logic code file being different from the ingress logic code file of the subroutine, the target page associated with the target logic code file comprises:
in response to the modified target logic code file being the page ingress logic code file, determining a page corresponding to the target logic code file as the target page; or
in response to the modified target logic code file being the non-page ingress logic code file, analyzing a page dependency relationship on the target logic code file, to obtain a dependency page that depends on the target logic code file, and determining the dependency page as the target page.

4. The method according to any one of claims 1 to 3, wherein replacing the original component corresponding to the target logic code file with the target component corresponding to the target logic code file comprises:
replacing a component logic of the original component corresponding to the target logic code file with a component logic of the target component corresponding to the target logic code file; and
replacing a component instance of the original component corresponding to the target logic code file with a component instance of the target component corresponding to the target logic code file.

5. The method according to claim 4, wherein replacing the component instance of the original component corresponding to the target logic code file with the component instance of the target component corresponding to the target logic code file comprises:
obtaining the component instance of the original component from the logic code file of the target subroutine;
constructing the component instance of the target component based on a component attribute of the target component corresponding to the target logic code file; and
replacing the component instance of the original component with the component instance of the target component.

6. The method according to claim 5, wherein constructing the component instance of the target component based on the component attribute of the target component corresponding to the target logic code file comprises:
constructing a mapping relationship set for the target component based on an association relationship between an attribute and an attribute value of the target component corresponding to the target logic code file; and
constructing the component instance of the target component based on the mapping relationship set.

7. The method according to any one of claims 1 to 3, wherein determining, in response to the modified target logic code file being different from the ingress logic code file of the subroutine, the target page associated with the target logic code file comprises:
performing a hot reload process for the modified target logic code file when the modification operation carries a hot reload instruction; and
in response to the target logic code file being different from the ingress logic code file of the subroutine, determining, by using the hot reload process, the target page associated with the target logic code file.

8. The method according to claim 7, wherein performing the hot reload process for the modified target logic code file comprises:
invoking an update application code interface in a basic library in response to the target logic code file being the page ingress logic code file, to hot update the target page corresponding to the target logic code file; or
invoking an update application code interface in a basic library in response to the target logic code file being the non-page ingress logic code file, to hot update a page that depends on the target logic code file.

9. The method according to any one of claims 1 to 3, wherein
the modification operation is implemented by using a developer tool; and
before determining, in response to the modified target logic code file being different from the ingress logic code file of the subroutine, the target page associated with the target logic code file, the method further comprises:
monitoring, when a switch for automatic hot reload in the developer tool is turned on, whether the logic code file of the target subroutine changes; and
determining a type of the target logic code file in response to monitoring that the logic code file of the target subroutine changes, wherein the type comprises: an ingress logic code file of the target subroutine, the page ingress logic code file, and the non-page ingress logic code file.

10. A subroutine update apparatus, comprising:
a receiving unit, configured to receive a modification operation on a logic code file of a target subroutine on a development side;
a determining unit, configured to determine, in response to a modified target logic code file being different from an ingress logic code file of the subroutine, a target page associated with the target logic code file;
a registration unit, configured to register a target component based on the target logic code file when an original component in the target page is currently in a loaded state;
a replacement unit, configured to replace the original component corresponding to the target logic code file with the target component corresponding to the target logic code file; and
an update unit, configured to update and display an updated target page, the updated target page comprising the target component.

11. An electronic device, comprising a memory and a processor, the memory having an application program stored therein, and the processor being configured to run the application program stored in the memory, to perform the operations in the subroutine update method according to any one of claims 1 to 9.

12. A computer-readable storage medium, having a plurality of instructions stored therein, the instructions being adapted to be loaded by a processor, to perform the operations in the subroutine update method according to any one of claims 1 to 9.

13. A computer program product, comprising a computer program or instructions, the computer program or the instructions, when executed by a processor, causes the processor to implement the operations in the subroutine update method according to any one of claims 1 to 9.
